# EUROPÄISCHE PATENTSCHRIFT

(11) **EP 4 029 752 B1**
(45) Veröffentlichungstag und Bekanntmachung des Hinweises auf die Patenterteilung: **05.03.2025**
(21) Anmeldenummer: 21206629.4
(22) Anmeldetag: 05.11.2021
(51) Int. Cl.: B60W 50/14

(54) **BOS-FAHRZEUG**
BOS VEHICLE
VÉHICULE BOS

(30) Priorität: 13.01.2021 DE 102021200243
(43) Veröffentlichungstag der Anmeldung: 20.07.2022
(73) Patentinhaber: Albert Ziegler GmbH, 89537 Giengen a. d. Brenz (DE)
(72) Erfinder: Boden, Ingo, 89129 Langenau (DE); Quintenz, Tobias, 89275 Elchingen (DE)
(74) Vertreter: Patentanwälte Magenbauer & Kollegen Partnerschaft mbB

(56) Entgegenhaltungen:
- EP-A1- 3 599 124
- DE-A1- 102018 200 915
- US-A- 4 189 005
- US-A1- 2013 253 711
- US-A1- 2018 221 694
- US-A1- 2019 259 208

## Beschreibung

Die Erfindung betrifft ein BOS-Fahrzeug, insbesondere Feuerwehrfahrzeug, mit einem Kabinenmodul, in dem eine Bedieneinrichtung zur Bedienung von Funktionseinheiten des BOS-Fahrzeuges angeordnet ist, und mit einer Überwachungseinrichtung zur Überwachung von Betriebsgrößen der Funktionseinheiten und/oder Umgebungsbedingungen und mit einer mit der Überwachungseinrichtung gekoppelten Ausgabeeinrichtung zur Ausgabe von Zustandsinformationen der Betriebsgrößen der Funktionseinheiten, derart, dass wenigstens ein im Kabinenmodul befindlicher Bediener die Zustandsinformationen wahrnehmen kann, wobei die Ausgabeeinrichtung ein Sprachausgabemodul aufweist, über das Zustandsinformationen per Sprache ausgebbar sind.

BOS-Fahrzeuge (BOS: Behörden und Organisationen mit Sicherheitsaufgaben) sind bereits seit langem bekannt. Bekanntermaßen besteht insbesondere bei Flugfeldlöschfahrzeugen der Bedarf, sehr schnell am Brandherd zu sein und unmittelbar nach Eintreffen am Brandherd mit der Brandbekämpfung zu beginnen. Hierzu sind die bekannten Flugfeldlöschfahrzeuge mit sehr leistungsstarken Antrieben ausgestattet. In der Fahrerkabine des Flugfeldlöschfahrzeuges sitzen in der Regel zwei Bedienpersonen, wobei mindestens eine der Bedienpersonen die zur Brandbekämpfung erforderlichen Funktionseinheiten steuert. Zu diesen Funktionseinheiten gehört insbesondere eine Werfereinheit, die beispielsweise an einem Gelenkarm gelagert ist, so dass ein zielgerichtetes Positionieren an den Brandherd möglich ist. Dies erfordert von der Bedienperson höchste Konzentration. Insbesondere auch deswegen, da sich die Situation am Brandherd ständig ändern kann. Jedoch ist es notwendig, Betriebsgrößen von Funktionseinheiten, beispielsweise den Füllstand eines Wassertanks zu überwachen und zu beobachten, um die Brandbekämpfung mit den vorhandenen Ressourcen besser einteilen zu können, beispielsweise rechtzeitig die Pumpe abzuschalten bevor der Tank ganz leer ist, um Kavitation zu verhindern.

Hierzu sind bereits Bedieneinrichtungen bekannt, die eine im Kabinenmodul angeordnete zentrale Steuerkonsole aufweisen, die mit einer Bedieneinheit ausgestattet ist, an dem beispielsweise über Bedienfelder einzelne Funktionseinheiten gezielt angewählt und dann angesteuert werden können. Ferner weisen die Bedieneinheiten digitale und/oder analoge Anzeigen für Betriebsgrößen der einzelnen Funktionseinheiten auf. Ferner umfasst die Bedieneinrichtung in der Regel noch Bedienelemente, beispielsweise in Form eines Joysticks zur Bedienung bestimmter Funktionseinheiten, beispielsweise zur Bewegungssteuerung einer Werfereinrichtung.

Da sich der Bediener bei der Bedienung einer Funktionseinheit, also beispielsweise eines Werfers, in höchsten Maße konzentrieren muss, ist es nicht möglich, dass er während der Bedienung noch die Zustandsinformationen der anderen Funktionseinheiten im Blick hat. Es ist von Vorteil, dass eine zweite Person im Kabinenmodul die Zustandsinformationen abliest und ansagt.

Die US 2013/0253711 A1 offenbart ein Feuerwehrfahrzeug, mit einem an Bord des Feuerfahrzeugs befindlichen Brandbekämpfungssystem. Das Brandbekämpfungssystem umfasst einen Zentralcomputer, der drahtlos oder drahtgebunden Sensordaten von verschiedenen Funktionseinheiten empfangen und verarbeiten und gegebenenfalls die Funktionseinheiten regelungstechnisch ansteuern kann. Es wird erwähnt, dass ein User-Input/Output-Interface vorgesehen sein kann, über das die Anzeige von Zustandsinformationen der Funktionseinheiten möglich ist. Ferner wird erwähnt, dass Alarme und Warnungen herausgegeben werden können, die vorzugsweise visualisiert sind. Es wird ferner erwähnt, dass auch andere Kommunikationsarten verwendet werden können, beispielsweise audio warning alarms, recorded audible messages, and voice synthesis systems.

Die US 2018/0221694 A1 offenbart ein Flugfeldlöschfahrzeug mit einer sogenannten " Piercing-Lanze" an einem Auslegerarm. Es sind verschiedene Displays zur Anzeige diverser Zustandsinformationen von Funktionseinheiten des Flugfeldlöschfahrzeugs erwähnt.

Die US 2019/0259208 offenbart ein System und ein Verfahren zur Präsentation von lageabhängigen virtuell beispielweise auf einem Display dargestellten Straßenschildern. Gegebenenfalls kann das Navigationssystem beziehungsweise Signalverarbeitungssystem auch durch eine Sprachunterstützung ergänzt sein.

Die EP 3 599 124 A1 offenbart ein Kontrollsystem für Notifikationen, das den emotionalen und kognitiven Zustand des Fahrers eines Kraftfahrzeugs analysiert und aufgrund des ermittelten Ergebnisses Anweisungen an den Fahrer herausgibt.

Aufgabe der Erfindung ist es, ein BOS-Fahrzeug der eingangs erwähnten Art zu schaffen, bei dem die Effizienz bei der Brandbekämpfung gegenüber herkömmlichen BOS-Fahrzeugen weiter erhöht ist.

Diese Aufgabe wird durch ein BOS-Fahrzeug mit den Merkmalen des unabhängigen Anspruchs 1 gelöst. Weiterbildungen der Erfindung sind in den Unteransprüchen dargestellt.

Das erfindungsgemäße BOS-Fahrzeug zeichnet sich dadurch aus, dass das Sprachausgabemodul eine Warnung vor Hindernissen oder bei schlechter Sicht ermöglicht.

Mit dem Sprachausgabemodul der Ausgabeeinrichtung wird die Möglichkeit einer automatisierten Sprachausgabe geschaffen, über die von der Überwachungseinrichtung ermittelten Zustandsinformationen per Sprache ausgegeben werden können. Insofern ist es nicht notwendig, dass die zweite Bedienperson im Kabinenmodul Zustandsinformationen ansagt, sondern diese Person kann sich dann um andere Dinge kümmern. Beispielsweise ist es so auch möglich, dass lediglich eine Bedienperson im BOS-Fahrzeug sitzt und dennoch eine zuverlässige und effiziente Brandbekämpfung durchgeführt werden kann. Das Sprachausgabemodul sorgt also für eine präzise Durchsage der erforderlichen und notwendigen Zustandsinformationen der wichtigen Funktionseinheiten.

Bei einer Weiterbildung der Erfindung sind die Funktionseinheiten ausgewählt aus der Gruppe bestehend aus: Pumpe, Werfereinrichtung, Wassertank, Schaummitteltank, Kraftstofftank, Beleuchtungseinrichtung, insbesondere Lichtmast, Fahrzeugmotor, telemetrisch mit dem BOS-Fahrzeug verbundenes weiteres BOS-Fahrzeug.

Bei einer Weiterbildung der Erfindung sind die Betriebsgrößen ausgewählt aus der Gruppe bestehend aus: Wasserabgabemenge, Restlöschdauer in Abhängigkeit der aktuellen Durchflussmenge, Füllstandwassertank, Füllstand Schaummitteltank, Temperatur Fahrzeugmotor, Öldruck Fahrzeugmotor, Füllstand Kraftstofftank, Position eines Werfers der Werfereinrichtung, Telemetriedaten Co-BOS-Fahrzeug.

Es lässt sich also per Sprachausgabe beispielsweise der Füllstand des Wassertanks ansagen, also beispielsweise die Angabe "Füllstand Wassertank 50%", so dass rechtzeitig vor dem vollständigen Leeren des Wassertanks geeignete Maßnahmen ergriffen werden können, beispielsweise die Reduktion der Wasserabgabemenge oder das Abstellen der Pumpe.

Es wird ermöglicht per Sprachausgabe vor Hindernissen zu warnen, beispielsweise bei der Rückwärtsfahrt oder bei schlechter Sicht beispielsweise durch Rauchentwicklung vom Brandherd, Nebel oder Löschschaum.

Bei einer Weiterbildung der Erfindung weist die Überwachungseinrichtung wenigsten eine Rechnereinheit auf, mit einem Speicher, in dem Vorgabewerte der zu überwachenden Betriebsgrößen und/oder Umgebungsbedingungen eingespeichert sind, wobei die Ist-Werte der Betriebsgrößen mit den Vorgabewerten vergleichbar sind und bei Übereinstimmung, Unterschreitung oder Überschreitung des Vorgabewerts ein Sprachsignal ausgebbar ist.

Dadurch ist es beispielsweise möglich, dass die Sprachausgabe so eingestellt ist, dass die Zustandsinformationen nicht kontinuierlich ausgegeben werden, sondern lediglich falls die Vorgabewerte erreicht, unterschritten oder überschritten sind. Beispielsweise könnten für den Füllstand der Wassertanks die Vorgabewerte so eingestellt werden, dass eine Ansage alle 10%-Schritte erfolgt.

Bei einer Weiterbildung der Erfindung umfassen die Vorgabewerte Schwellwerte, die kritische Betriebszustände der Betriebsgrößen repräsentieren, wobei bei Unterschreitung oder Überschreitung der Schwellwerte ein Sprachsignal ausgebbar ist. Es ist beispielsweise möglich, dass die Sprachausgabe eine qualitative Zustandsinformation gibt, beispielsweise "Temperatur Fahrzeugmotor kritisch". Insofern können sich normale Vorgabewerte, die beispielsweise an die quantitative Zustandsinformation (beispielsweise: "Füllstand Wassertank 50%") umfassen von der Ausgabe von Schwellwerten unterschreiten, die eher als qualitative, beispielsweise warnende Sprachausgabe erfolgen.

In besonders bevorzugter Weise ist die Ausgabe von Sprachsignalen im Zusammenhang mit der Überschreitung oder Unterschreitung eines Schwellwerts zusätzlich noch von einem akustischen Signal begleitet.

Bei einer Weiterbildung der Erfindung weist die Ausgabeeinrichtung wenigstens einen insbesondere im Kabinenmodul angeordneten Lautsprecher auf. Alternativ oder zusätzlich ist es möglich, dass der Bediener die Sprachsignale über ein Headset empfängt.

In besonders bevorzugter Weise handelt es sich bei dem Feuerwehrfahrzeug um ein Flugfeldlöschfahrzeug, das eine Werfereinrichtung mit wenigstens einem Werfer aufweist. Selbstverständlich ist es möglich, die Erfindung auch bei anderen BOS-Fahrzeugen, insbesondere Feuerwehrfahrzeugen einzusetzen, beispielsweise Industrie-Löschfahrzeugen, Bergungsfahrzeugen etc.

Bei einer Weiterbildung der Erfindung ist der wenigstens eine Werfer der Werfereinheit an der Front des Fahrzeugs und/oder an einem bewegbaren Gelenkarm und/oder direkt am Fahrzeugdach angeordnet. Mit dem Sprachausgabemodul der Ausgabeeinrichtung ist es also möglich, bei der Bedienung des Werfers Zustandsinformationen über die Position des Werfers zu erhalten. Die Sprachausgabe dient hier also zur Zustandsinformation über die gerade bediente Funktionseinheit.

In besonders bevorzugter Weise weist die Überwachungseinrichtung mehrere jeweils den zu überwachenden Funktionseinheiten zugeordnete Sensoren auf, die jeweils gemessenen Ist-Werten der Betriebsgrößen zugeordneten Sensorsignale an die Recheneinheit übermitteln. Bei den Sensoren kann es sich beispielsweise um einen Füllstands-Sensor am Wasser- oder Schaummitteltank handeln, einen Temperatursensor am Fahrzeugmotor, einen Näherungssensor an der Fahrzeugperipherie zur Ermittlung von Hindernissen oder dergleichen.

Bei einer Weiterbildung der Erfindung ist die Ausgabeeinrichtung mittels Aktivierungsmitteln zwischen einem Offline-Modus und einem die Ausgabe von Sprachsignalen ermöglichenden Betriebsmodus umschaltbar.

In besonders bevorzugter Weise umfassen die Aktivierungsmittel ein von der Überwachungseinrichtung übermittelbares Aktivierungssignal. In besonders bevorzugter Weise ist das Aktivierungssignal durch Aktivierung einer bestimmten Funktionseinheit erzeugbar. Hier ist beispielsweise die Aktivierung der Bordpumpe zu nennen. Durch die Aktivierung der Bordpumpe wird sozusagen ein Start des Einsatzes definiert, so dass ab diesem Zeitpunkt Sprachausgaben erfolgen.

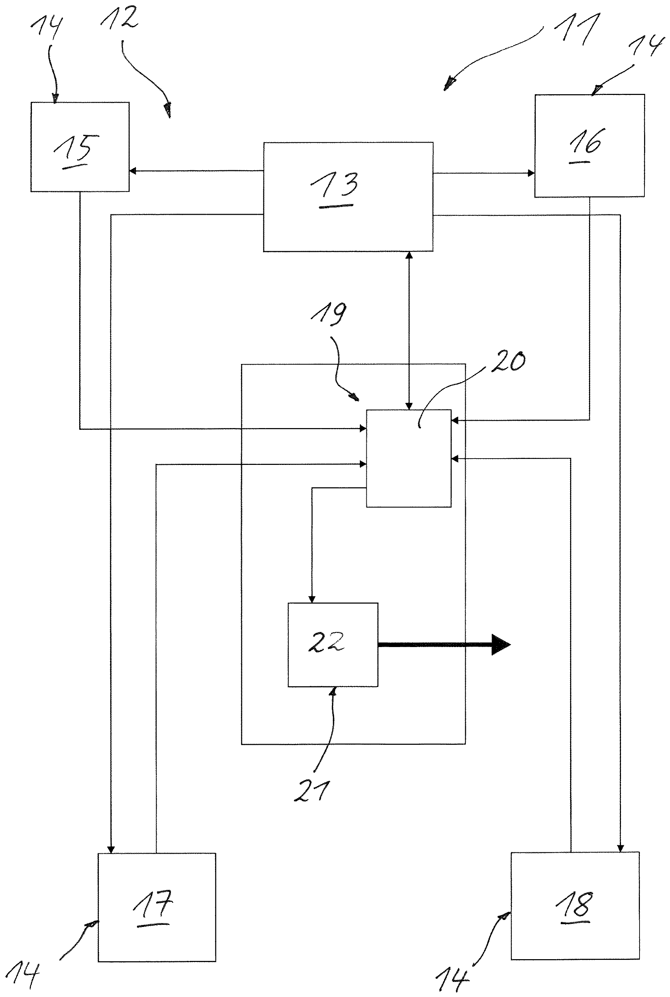

Ein bevorzugtes Ausführungsbeispiel der Erfindung ist in der Zeichnung dargestellt und wird im Folgenden erläutert. Die einzige Figur der Zeichnung zeigt:
eine schematische Darstellung der Bedieneinrichtung, der Überwachungseinrichtung und der Ausgabeeinrichtung und deren Verknüpfung an Bord eines erfindungsgemäßen BOS-Fahrzeugs.

Die einzige Figur zeigt schematisch die die Erfindung betreffenden wichtigen Komponenten des erfindungsgemäßen BOS-Fahrzeugs 11. Das BOS-Fahrzeug 11 wird im Folgenden beispielhaft anhand eines Flugfeldlöschfahrzeugs erläutert. Es ist selbstverständlich möglich, die Erfindung auch bei anderen BOS-Fahrzeugen einzusetzen.

Das BOS-Fahrzeug 11 besitzt ein Kabinenmodul 12, das eine Fahrerkabine oder eine kombinierte Fahrer-/Mannschaftskabine sein kann. Im Falle eines Flugfeldlöschfahrzeuges ist das Kabinenmodul 12 als Fahrerkabine ausgestaltet, in dem sich in der Regel zwei Bedienplätze für zwei Bediener befinden, wovon einer der Fahrer ist.

Im Kabinenmodul 12 befindet sich eine Bedieneinrichtung 13, die in der Regel verschiedene Bedienelemente, zum Beispiel Joysticks und verschiedene Bedieneinheiten aufweist. Die Bedieneinheiten besitzen in der Regel verschiedene Bedienfeldeinheiten (nicht dargestellt), die jeweils einer Funktionseinheit 14 des BOS-Fahrzeuges, in diesem Fall Flugfeldlöschfahrzeuges, zugeordnet sind. Durch geeignete Menüführung der Bedieneinheit, d.h. durch das Auswählen und Aktivieren eines Bedienfelds, lässt sich die zugeordnete Funktionseinheit 14 bedienen.

Zu den Funktionseinheiten 14 zählen im Falle eines Flugfeldlöschfahrzeugs eine Pumpe 15, insbesondere in Form einer Feuerlöschpumpe, die über den Fahrzeugmotor angetrieben werden kann, eine Werfereinrichtung 16, mit wenigstens einem Werfer, ein Wassertank 17 und ein Schaummitteltank 18.

Zu den weiteren Funktionseinheiten 14 gehören noch der Kraftstofftank, eine Beleuchtungseinrichtung, der Fahrzeugmotor und ein telemetrisch mit dem BOS-Fahrzeug, insbesondere Flugfeldlöschfahrzeug verbundenen Co-BOS-Fahrzeug.

Das BOS-Fahrzeug, also im beschriebenen Beispielsfall das Flugfeldlöschfahrzeug besitzt ferner eine Überwachungseinrichtung 19 zur Überwachung von Betriebsgrößen der Funktionseinheiten 14 und/oder Umgebungsbedingungen.

Zu den Betriebsgrößen, die mittels der Überwachungseinrichtung 19 überwacht werden, gehören die Wasserabgabemenge, die Restlöschdauer in Abhängigkeit der aktuellen Durchflussmenge, der Füllstand des Wassertanks 17, der Füllstand des Schaummitteltanks 18, die Temperatur des Fahrzeugmotors, der Öldruck des Fahrzeugmotors, der Füllstand des Kraftstofftanks, die Position eines Werfers der Werfereinrichtung und Telemetriedaten von weiteren BOS-Fahrzeugen.

Wie insbesondere schematisch in der einzigen Figur gezeigt, besitzt die Überwachungseinrichtung 19 mehrere Sensoren, die jeweils einer Funktionseinheit 14 zugeordnet sind. Im Falle des Wassertanks 17 ist diesem zweckmäßigerweise ein Füllstands-Sensor zugeordnet. Im Falle des Schaummittel-Tanks ist diesem zweckmäßigerweise ebenfalls ein Füllstands-Sensor zugeordnet. Im Falle des Fahrzeugmotors ist diesem zweckmäßigerweise ein Temperatur-Sensor zugeordnet. Im Falle des Kraftstofftanks ist diesem Zweckmäßigerweise ein Füllstands-Sensor zugeordnet.

Zweckmäßigerweise sind Bedieneinrichtung 13, Überwachungseinrichtung 19 und Ausgabeeinrichtung mit Sprachausgabemodul 22 über ein bordgestütztes Bussystem, insbesondere CAN-Bussystem miteinander verbunden. Die Übermittlung von Datensignalen, insbesondere Sensorsignalen kann drahtlos oder drahtgebunden erfolgen.

Das Flugfeldlöschfahrzeug besitzt eine Werfereinrichtung 16, die in der Regel mehrere Werfer aufweist. Einer der Werfer ist in der Regel an der Fahrzeugfront angeordnet. Zweckmäßigerweise ist ein weiterer Werfer an einem Gelenkarm angeordnet, der zusätzlich noch eine Durchstoßvorrichtung in Form einer Piercing-Lanze aufweisen kann. Der Gelenkarm ist in der Regel einerseits am Fahrzeugdach gelagert und trägt an seinem freien Ende den Werfer ggf. die Piercing-Lanze. Dem Werfer ist zweckmäßigerweise ein Positions-Sensor zugeordnet, so dass die aktuelle Position des Werfers überwacht werden kann.

Wie insbesondere in der Figur gezeigt, übermitteln die verschiedenen Sensoren Ist-Werte der überwachten Betriebsgröße, also beispielsweise des Füllstands des Wassertanks oder der Position des Werfers an eine Rechnereinheit 20 der Überwachungseinrichtung 19.

In der Regel ist die Rechnereinheit Bestandteil einer elektronischen Steuer-/Regeleinrichtung, wodurch ein Ist-Sollwert Vergleich von gemessenen Ist-Werten der Betriebsgrößen mit vorgegebenen Soll-Werten stattfinden kann, um ggf. den überwachten Prozess nachregeln zu können. Ein Beispiel hierfür ist die Überwachung des Ausgangsdrucks des Löschmittels beim Auswerfen aus dem Werferrohr, so dass beim Absinken des Drucks unter einem vorgegebenen Sollwert ggf. die Pumpenleistung erhöht werden kann.

Das BOS-Fahrzeug umfasst ferner als wichtige Komponente eine mit der Überwachungseinrichtung 19 gekoppelte Ausgabeeinrichtung 21 zur Ausgabe von Zustandsinformationen der Betriebsgrößen der Funktionseinheiten 14, derart, dass wenigstens ein im Kabinenmodul 12 befindlicher Bediener die Zustandsinformationen wahrnehmen kann. Die Ausgabeeinrichtung 21 besitzt ein Sprachausgabemodul 22, über die Zustandsinformationen per Sprache ausgegeben werden können.

In der Rechnereinheit 20 sind Vorgabewerte der zu überwachenden Betriebsgrößen und/oder Umgebungsbedingungen eingespeichert. Die insbesondere mittels der Sensoren übermittelten Ist-Werte der Betriebsgrößen werden mit den Vorgabewerten verglichen, wobei bei Übereinstimmung, Unterschreitung oder Überschreitung eines Vorgabewerts ein Sprachsignal ausgegeben werden kann.

Es ist beispielsweise möglich, für den Wassertank Vorgabewerte in 10%-Schritten einzuspeichern, so dass eine Sprachausgabe nur dann erfolgt, wenn der Füllstand des Wassertanks wieder um 10% abgenommen hat. Der Text für eine Sprachausgabe wäre beispielsweise "Füllstand Wassertank 50%", der nächste Text wäre dann "Füllstand Wassertank 40%". Die Wahl der Vorgabewerte ist natürlich beliebig und es ist ggf. im Fall der Überwachung von Füllständen auch die Einspeicherung von Vorgabewerten in 5%-Schritten denkbar.

Wesentlich ist, dass die Vorgabewerte Schwellwerte also Minimalwerte oder Maximalwerte umfassen, die kritische Betriebszustände der Betriebsgrößen repräsentieren, wobei bei Unterschreitung oder Überschreitung der Schwellwerte ein Sprachsignal ausgegeben werden kann. Der Text einer solchen Sprachausgabe, beispielsweise bei Unterschreitung eines Minimalwertes, kann beim Beispielsfall Kraftstofftank folgendermaßen lauten: "Füllstand Kraftstofftank kritisch". Hier ist also eine qualitative Aussage über den Füllstand des Kraftstofftanks denkbar, jedoch kann alternativ auch die Sprachausgabe "Füllstand Kraftstofftank 10%" lauten.

Es ist möglich, dass bei Ausgabe eines sogenannten Sprach-Warnsignals dieses noch zusätzlich von einem akustischen Signal, beispielsweise einem Alarm, einem Piepen oder dergleichen begleitet wird.

Die Ausgabeeinrichtung 21 besitzt ferner Aktivierungsmittel, um die Ausgabeeinrichtung 21 zwischen einem Offline-Modus und einem die Ausgabe von Sprachsignalen ermöglichenden Betriebsmodus umzuschalten.

Die Aktivierungsmittel können ein von der Überwachungseinrichtung 19 übermittelbare Aktivierungssignal umfassen. Das Aktivierungssignal kann durch Aktivierung einer bestimmten Funktionseinheit, beispielsweise der Pumpe, erzeugbar sein.

Im Folgenden soll die Erfindung am Beispielsfall einer Brandbekämpfung durch ein Flugfeldlöschfahrzeug erläutert werden.

Das Flugfeldlöschfahrzeug fährt zur Brandstelle. Die Ausgabeeinrichtung befindet sich zweckmäßigerweise im Offline-Modus, so dass während der Fahrt zur Brandstelle keine Sprachausgaben erfolgen. Gegebenenfalls kann die Ausgabeeinrichtung 21 bei schlechter Sicht, beispielsweise durch Rauch oder Nebel, aktiviert werden, so dass per Sprachausgabe vor einer Kollision mit einem Hindernis gewarnt wird. Nachdem das Flugfeldlöschfahrzeug die Brandstelle erreicht hat, ist es natürlich die vordringlichste Aufgabe den Brandherd zu bekämpfen. Daher wird die Feuerlöschpumpe aktiviert, die gleichzeitig ein Aktivierungssignal für die Ausgabeeinrichtung 21 ausgibt, so dass diese aktiviert wird und ab diesem Zeitpunkt Sprachausgaben erfolgen können.

Der Bediener wird dann als eine der wichtigsten Aufgaben die Werfer bedienen. Hierzu ist für den Bediener höchste Konzentration erforderlich, so dass er nebenbei nicht auch noch Zustandsinformationen der anderen Funktionseinheiten, beispielsweise den Füllstand des Wassertanks 17 oder den Füllstand des Schaummitteltanks 18 oder den Füllstand der Kraftstoffanzeige abrufen kann.

Hier setzt die Erfindung ein, denn der Bediener kann sich voll und ganz auf die Aufgabe der Bedienung der Werfereinrictung konzentrieren, da er über die Ausgabeeinrichtung und das Sprachausgabemodul per Sprachausgabe Zustandsinformationen von Betriebsgrößen wichtiger Funktionseinheiten erhält. Beispielsweise wird ihm angesagt, dass der Füllstand des Wassertanks 17 nur noch bei 50% liegt usw. Ferner kann er Warnmeldungen empfangen, beispielsweise derart "Motortemperatur Fahrzeugmotor kritisch" so dass er entsprechende Gegenmaßnahmen einleiten kann.

Insgesamt bietet das Sprachausgabemodul 22 der Ausgabeeinrichtung 21 bei der Brandbekämpfung eine größere Sicherheit und Effizienz.

## Patentansprüche

1. BOS-Fahrzeug, insbesondere Feuerwehrfahrzeug, mit wenigstens einem Kabinenmodul (12), in dem eine Bedieneinrichtung (13) zur Bedienung von Funktionseinheiten (14) des BOS-Fahrzeugs (11) angeordnet ist, und mit einer Überwachungseinrichtung (19) zur Überwachung von Betriebsgrößen der Funktionseinheiten (14) und/oder Umgebungsbedingungen, und mit einer mit der Überwachungseinrichtung (19) gekoppelten Ausgabeeinrichtung (21) zur Ausgabe von Zustandsinformationen der Betriebsgrößen der Funktionseinheiten (14), derart, dass wenigstens ein im Kabinenmodul (12) befindlicher Bediener Zustandsinformationen wahrnehmen kann, wobei die Ausgabeeinrichtung (21) ein Sprachausgabemodul (22) aufweist, über das Zustandsinformationen per Sprache ausgebbar sind, **dadurch gekennzeichnet, dass** das Sprachausgabemodul eine Warnung vor Hindernissen oder bei schlechter Sicht per Sprachausgabe ermöglicht.

2. BOS-Fahrzeug nach Anspruch 1, **dadurch gekennzeichnet, dass** die Funktionseinheiten (14) ausgewählt sind aus der Gruppe bestehend aus: Pumpe (15), Werfereinrichtung (16), Wassertank (17), Schaummitteltank (18), Kraftstofftank, Beleuchtungseinrichtung, insbesondere Lichtmast, Fahrzeugmotor, telemetrisch mit dem BOS-Fahrzeug verbundenes Co-BOS-Fahrzeug.

3. BOS-Fahrzeug nach Anspruch 1 oder 2, **dadurch gekennzeichnet, dass** die Betriebsgrößen ausgewählt sind aus der Gruppe bestehend aus: Wasserabgabemenge, Restlöschdauer in Abhängigkeit der aktuellen Durchflussmenge, Füllstand Wassertank, Füllstand Schaummitteltank, Temperatur Fahrzeugmotor, Öldruck Fahrzeugmotor, Füllstand Kraftstofftank, Position eines Werfers der Werfereinrichtung, Telemetriedaten Co-BOS-Fahrzeug.

4. BOS-Fahrzeug nach einem der vorhergehenden Ansprüche, **dadurch gekennzeichnet, dass** die Überwachungseinrichtung (19) wenigstens eine Rechnereinheit (20) aufweist, mit einem Speicher, in dem Vorgabewerte der zu überwachenden Betriebsgrößen und/oder Umgebungsbedingungen eingespeichert sind, wobei Ist-Werte der Betriebsgrößen mit den Vorgabewerten vergleichbar sind und bei Übereinstimmung, Unterschreitung oder Überschreitung der Vorgabewerte ein Sprachsignal ausgebbar ist.

5. BOS-Fahrzeug nach Anspruch 4, **dadurch gekennzeichnet, dass** die Vorgabewerte Schwellwerte umfassen, die kritische Betriebszustände der Betriebsgrößen repräsentieren, wobei bei Unterschreitung oder Überschreitung der Schwellwerte ein Sprachsignal ausgegbbar ist.

6. BOS-Fahrzeug nach Anspruch 5, **dadurch gekennzeichnet, dass** die Ausgabe von Sprachsignalen in Zusammenhang mit der Überschreitung oder Unterschreitung eines Schwellwertes zusätzlich noch von einem akustischen Signal begleitet ist.

7. BOS-Fahrzeug nach einem der vorhergehenden Ansprüche, **dadurch gekennzeichnet, dass** die Ausgabeeinrichtung (21) wenigstens einen insbesondere im Kabinenmodul angeordneten Lautsprecher aufweist.

8. BOS-Fahrzeug nach einem der vorhergehenden Ansprüche, **dadurch gekennzeichnet, dass** es sich bei dem Feuerwehrfahrzeug um ein Flugfeldlöschfahrzeug handelt, das eine Werfereinrichtung (16) mit wenigstens einem Werfer aufweist.

9. BOS-Fahrzeug nach Anspruch 8, **dadurch gekennzeichnet, dass** wenigstens ein Werfer der Werfereinrichtung (16) an der Front des Fahrzeugs und/oder an einem bewegbaren Gelenkarm und/oder direkt auf dem Fahrzeugdach angeordnet ist.

10. BOS-Fahrzeug nach einem der vorhergehenden Ansprüche, **dadurch gekennzeichnet, dass** die Überwachungseinrichtung (19) mehrere jeweils den zu überwachenden Funktionseinheiten (14) zugeordnete Sensoren aufweist, die jeweils den gemessenen Ist-Werten der Betriebsgrößen zugeordnete Sensorsignale an die Rechnereinheit (20) übermitteln.

11. BOS-Fahrzeug nach einem der vorhergehenden Ansprüche, **dadurch gekennzeichnet, dass** die Ausgabeeinrichtung (21) mittels Aktivierungsmitteln zwischen einem Offline-Modus und einem die Ausgabe von Sprachsignalen ermöglichenden Betriebsmodus umschaltbar ist.

12. BOS-Fahrzeug nach Anspruch 11, **dadurch gekennzeichnet, dass** die Aktivierungsmittel ein von der Überwachungseinrichtung (19) übermittelbares Aktivierungssignal umfassen.

13. BOS-Fahrzeug nach Anspruch 12, **dadurch gekennzeichnet, dass** das Aktivierungssignal durch Aktivierung einer bestimmten Funktionseinheit (14), beispielsweise Pumpe (15), erzeugbar ist.

## Claims

1. Emergency response vehicle, **in** particular fire engine, having at least one cab module (12), in which an operating device (13) is arranged for operating functional units (14) of the emergency response vehicle (11), and having a monitoring device (19) for monitoring operating variables of the functional units (14) and/or environmental conditions, and having an output device (21) coupled to the monitoring device (19) for output of state information of the operating variables of the functional units (14) such that at least one operator present **in** the cab module (12) can discern state information, wherein the output device (21) has a voice output module (22), via which state information can be output by voice, **characterized in that** the voice output module provides a warning of obstacles or poor visibility by voice output.

2. Emergency response vehicle according to Claim 1, **characterized in that** the functional units (14) are selected from the group consisting of: pump (15), ejector device (16), water tank (17), foaming agent tank (18), fuel tank, lighting device, in particular light mast, vehicle engine, co-emergency response vehicle telemetrically connected to the emergency response vehicle.

3. Emergency response vehicle according to Claim 1 or 2, **characterized in that** the operating variables are selected from the group consisting of: water delivery rate, remaining extinguishing time depending on the current flow rate, water tank fill level, foaming agent tank fill level, vehicle engine temperature, vehicle engine oil pressure, fuel tank fill level, position of an ejector of the ejector device, telemetry data of the co-emergency response vehicle.

4. Emergency response vehicle according to one of the preceding claims, **characterized in that** the monitoring device (19) has at least one computer unit (20), having a memory, in which default values of the operating variables to be monitored and/or environmental conditions are stored, wherein actual values of the operating variables can be compared to the default values and a voice signal can be output if they match, undershoot or exceed the default values.

5. Emergency response vehicle according to Claim 4, **characterized in that** the default values comprise threshold values, which represent critical operating states of the operating variables, wherein a voice signal can be output if the threshold values are undershot or exceeded.

6. Emergency response vehicle according to Claim 5, **characterized in that** the output of voice signals in conjunction with a threshold value being exceeded or undershot is also accompanied by an acoustic signal.

7. Emergency response vehicle according to one of the preceding claims, **characterized in that** the output device (21) has at least one loudspeaker arranged in particular in the cab module.

8. Emergency response vehicle according to one of the preceding claims, **characterized in that** the fire engine is an airport fire-fighting vehicle, which has an ejector device (16) having at least one ejector.

9. Emergency response vehicle according to Claim 8, **characterized in that** at least one ejector of the ejector device (16) is arranged on the front of the vehicle and/or on a moveable articulated arm and/or directly on the vehicle roof.

10. Emergency response vehicle according to one of the preceding claims, **characterized in that** the monitoring device (19) has a plurality of sensors which are each assigned to the functional units (14) to be monitored and which transmit sensor signals respectively assigned to the measured actual values of the operating variables to the computer unit (20).

11. Emergency response vehicle according to one of the preceding claims, **characterized in that** the output device (21) can be switched between an offline mode and an operating mode that enables voice signals to be output by means of activation means.

12. Emergency response vehicle according to Claim 11, **characterized in that** the activation means comprise an activation signal that can be transmitted by the monitoring device (19).

13. Emergency response vehicle according to Claim 12, **characterized in that** the activation signal can be produced by activating a certain functional unit (14), for example pump (15).

## Revendications

1. Véhicule BOS [de l'allemand « Behörden und Organisationen mit Sicherheitsaufgaben », soit en français « des autorités et organisations affectées de missions de sécurité »], avec au moins un module de cabine (12), dans lequel un dispositif d'utilisation (13) destiné à utiliser des unités fonctionnelles (14) du véhicule BOS (11) est disposé, et avec un dispositif de surveillance (19) destiné à surveiller des grandeurs de fonctionnement des unités fonctionnelles (14) et/ou des conditions d'environnement, et avec un dispositif d'émission (21) couplé au dispositif de surveillance (19), destiné à émettre des informations d'état des grandeurs de fonctionnement des unités fonctionnelles (14) de telle manière qu'au moins un utilisateur se trouvant dans le module de cabine (12) peut percevoir des informations d'état, dans lequel le dispositif d'émission (21) présente un module d'émission vocale (22), par l'intermédiaire duquel des informations d'état peuvent être émises vocalement, **caractérisé en ce que** le module d'émission vocale permet un avertissement par émission vocale quant à la présence d'obstacles ou en cas de mauvaise visibilité.

2. Véhicule BOS selon la revendication 1, **caractérisé en ce que** les unités fonctionnelles (14) sont choisies parmi le groupe constitué de : pompe (15), dispositif à lance (16), réservoir d'eau (17), réservoir de mousse (18), réservoir de carburant, dispositif d'éclairage, en particulier mât lumineux, moteur de véhicule, un véhicule Co-BOS connecté de manière télémétrique au véhicule BOS.

3. Véhicule BOS selon la revendication 1 ou 2, **caractérisé en ce que** les grandeurs de fonctionnement sont choisies parmi le groupe constitué de : quantité de sortie d'eau, durée d'extinction restante en fonction du débit instantané, niveau de remplissage réservoir d'eau, niveau de remplissage réservoir de mousse, température moteur de véhicule, pression d'huile moteur de véhicule, niveau de remplissage réservoir de carburant, position d'une lance d'un dispositif à lance, données télémétriques véhicule Co-BOS.

4. Véhicule BOS selon l'une quelconque des revendications précédentes, **caractérisé en ce que** le dispositif de surveillance (19) présente au moins une unité de calcul (20), avec une mémoire, dans laquelle des valeurs de spécification des grandeurs de fonctionnement à surveiller et/ou des conditions d'environnement sont sauvegardées, dans lequel des valeurs réelles des grandeurs de fonctionnement peuvent être comparées à des valeurs de spécification et un signal vocal peut être émis en cas de concordance, de non-dépassement ou de dépassement des valeurs de spécification.

5. Véhicule BOS selon la revendication 4, **caractérisé en ce que** les valeurs de spécification comprennent des valeurs seuils, qui représentent des états de fonctionnement critiques des grandeurs de fonctionnement, dans lequel un signal vocal peut être émis en cas de non-dépassement ou de dépassement des valeurs de seuil.

6. Véhicule BOS selon la revendication 5, **caractérisé en ce que** l'émission de signaux vocaux s'accompagne encore en supplément d'un signal acoustique en lien avec le dépassement ou le non-dépassement d'une valeur de seuil.

7. Véhicule BOS selon l'une quelconque des revendications précédentes, **caractérisé en ce que** le dispositif d'émission (21) présente au moins un haut-parleur disposé en particulier dans le module de cabine.

8. Véhicule BOS selon l'une quelconque des revendications précédentes, **caractérisé en ce que** le véhicule de sapeurs-pompiers est un véhicule d'extinction de terrain volant, qui présente un dispositif à lance (16) avec au moins une lance.

9. Véhicule BOS selon la revendication 8, **caractérisé en ce qu'**au moins une lance du dispositif à lance (16) est disposé sur l'avant du véhicule et/ou sur un bras articulé mobile et/ou directement sur le toit de véhicule.

10. Véhicule BOS selon l'une quelconque des revendications précédentes, **caractérisé en ce que** le dispositif de surveillance (19) présente plusieurs capteurs associés respectivement aux unités fonctionnelles (14) à surveiller, qui transmettent respectivement à l'unité de calcul (20) des signaux de capteur associés aux valeurs réelles mesurées des grandeurs de fonctionnement.

11. Véhicule BOS selon l'une quelconque des revendications précédentes, **caractérisé en ce que** le dispositif d'émission (21) peut être commuté entre un mode hors ligne et un mode de fonctionnement permettant l'émission de signaux vocaux au moyen de moyens d'activation.

12. Véhicule BOS selon la revendication 11, **caractérisé en ce que** les moyens d'activation comprennent un signal d'activation pouvant être transmis par le dispositif de surveillance (19).

13. Véhicule BOS selon la revendication 12, **caractérisé en ce que** le signal d'activation peut être généré par activation d'une unité fonctionnelle (14) donnée, par exemple une pompe (15).
